# EUROPEAN PATENT APPLICATION

(11) **EP 4 852 024 A1**
(43) Date of publication of application: **09.12.2026**
(21) Application number: 25829416.4
(22) Date of filing: 14.04.2025
(51) Int. Cl.: H01B 7/14

(54) **SUBMARINE CABLE AND FIXING DEVICE FOR SUBMARINE CABLE**

(30) Priority: 17.06.2024 CN 202410784063
(71) Applicant: Zhongtian Technology Submarine Cable Co., Ltd., Nantong, Jiangsu 226000 (CN); Jiangsu Zhongtian Technology Co., Ltd., Nantong, Jiangsu 226000 (CN); South Sea Submarine Cable Co., Ltd., Shanwei, Guangdong 516545 (CN); Zhongtian Dafeng Submarine Cable Co., Ltd., Jiangsu 224145 (CN); Shandong Offshore Engineering Cable & Wire Co., Ltd., Weihai, Shandong 264515 (CN)
(72) Inventor: JIN, Xingyu, Nantong, Jiangsu 226000 (CN); HU, Ming, Nantong, Jiangsu 226000 (CN); ZHANG, Hongliang, Nantong, Jiangsu 226000 (CN); ZHANG, Xiaolong, Nantong, Jiangsu 226000 (CN); ZHAO, Youlin, Nantong, Jiangsu 226000 (CN); QIAO, Jing, Nantong, Jiangsu 226000 (CN)
(74) Representative: Boult Wade Tennant LLP
(86) International application number: PCT/CN2025/088753
(87) International publication number: WO 2025/260932

(57) **Abstract**

The present invention relates to the technical field of cables, and provides a submarine cable and a fixing device for a submarine cable. The above submarine cable includes a plurality of conductive units, each conductive units includes a conductor layer, a conductor shielding layer, an insulating layer, an insulating shielding layer, a first wrapping layer, a shielding layer, and a second wrapping layer sequentially wrapped from inside to outside; the conductor layer is formed by stranding a plurality of conductors, gaps between the plurality of conductors are filled with a semi-conductive water-blocking adhesive, and a semi-conductive wrapping tape is wrapped outside the plurality of conductors. In the above submarine cable, by filling the gaps between the conductors with the semi-conductive water-blocking adhesive and compacting the plurality of conductors during stranding, the self-weight of the submarine cable is increased and meanwhile the outer diameter thereof is reduced, and the effect of improving the stability of the submarine cable can be achieved without adding counterweight blocks or increasing the thickness of each structural layer, thereby simplifying the production process and reducing the manufacturing cost.

## Description

This application claims priority to Chinese patent application No. 202410784063.4, filed with the China National Intellectual Property Administration on June 17, 2024, entitled "Submarine Cable and Fixing Device for Submarine Cable", which is hereby incorporated by reference in its entirety.

### TECHNICAL FIELD

The present application relates to the technical field of cables, in particular to a submarine cable and a fixing device for the submarine cable.

### BACKGROUND

The laying environment of submarine cables is complex and diverse. The most commonly adopted laying method in the seabed is direct laying on the seabed surface or burial in seabed soil. A main purpose of burial is to prevent waves and ocean currents from displacing the submarine cables, as continuous displacement will cause mechanical damage to the cables.

The burial of the submarine cables requires specialized equipment, has a long laying cycle, and may also have an impact on the seabed environment. In addition, the seabed environment in many areas does not support trenching, so direct laying on the seabed is the only option under certain circumstances.

Common long-length submarine cables are static submarine cables, with armor layers directly immersed in water and not torque-balanced, rendering them not supporting application in dynamic environments. Therefore, the stability of the cables must be guaranteed if they are laid directly on the seabed. In stability analysis, it can be found that some submarine cables are difficult to reach a stable state when an angle between the cables and ocean currents is large. In cases where burial is not supported, two solutions are generally adopted to ensure the stable state of the submarine cables: one is to add counterweight blocks or stones to press down unstable sections of the submarine cables; the second is to increase the thickness of each layer on the basis of conventional submarine cable design, or adopt double armor to increase the unit weight. Either method will undoubtedly increase the overall project cost.

### SUMMARY

The present invention provides a submarine cable and a fixing device for a submarine cable, to overcome a defect in the prior art that the manufacturing cost is increased for guaranteeing the stability of submarine cables.

The present invention provides a submarine cable, including a plurality of conductive units, each conductive unit including a conductor layer, a conductor shielding layer, an insulating layer, an insulating shielding layer, a first wrapping layer, a shielding layer and a second wrapping layer sequentially wrapped from inside to outside; where the conductor layer is formed by stranding a plurality of conductors; gaps between the plurality of conductors are filled with a semi-conductive water blocking adhesive; and a semi-conductive wrapping tape is wrapped outside the plurality of conductors.

According to the submarine cable provided by the present invention, when the plurality of conductors are stranded, a compaction coefficient factor is greater than or equal to 0.95.

According to the submarine cable provided by the present invention, the first wrapping layer and the second wrapping layer are a semi-conductive water blocking tape.

According to the submarine cable provided by the present invention, the shielding layer is a flat metal wire shielding layer.

According to the submarine cable provided by the present invention, the submarine cable further includes an optical fiber unit, the optical fiber unit is stranded together with the plurality of conductive units to form a cable; the optical fiber unit includes a stainless steel tube, a first armor layer and an outer sheath layer sequentially wrapped from inside to outside.

According to the submarine cable provided by the present invention, the submarine cable further includes a filling layer, a second armor layer and an outer covering layer sequentially wrapped from inside to outside, the filling layer being wrapped outside the cable.

According to the submarine cable provided by the present invention, the filling layer is a solid filling layer, and a filling factor of the filling layer is greater than or equal to 95%.

According to the submarine cable provided by the present invention, the second armor layer is a flat metal wire armor layer.

The present invention further provides a fixing device for a submarine cable, including a fixing support and the above submarine cable; where the fixing support includes a fixing assembly and a plurality of support legs, the fixing assembly being used for fixing the submarine cable, the plurality of support legs being connected to the fixing assembly, each support leg being inclined relative to a horizontal plane.

According to the fixing device for a submarine cable provided by the present invention, the fixing assembly includes a pair of clamps and a connecting member, first ends of the pair of clamps being rotatably connected, and second ends of the pair of clamps being connected through the connecting member.

The submarine cable provided by the present invention, by filling the gaps between the conductors with the semi-conductive water blocking adhesive and compacting the plurality of conductors during stranding, increases the self-weight of the submarine cable while reducing the outer diameter of the submarine cable, and the effect of improving the stability of the submarine cable can be achieved without adding counterweight blocks or increasing the thickness of each structural layer, simplifying the production process and reducing the manufacturing cost.

### BRIEF DESCRIPTION OF DRAWINGS

FIG. 1 is a structural schematic diagram of a submarine cable provided by the present invention;
FIG. 2 is one structural schematic diagram of a fixing device for a submarine cable provided by the present invention;
FIG. 3 is another structural schematic diagram of a fixing device for a submarine cable provided by the present invention;
FIG. 4 is a schematic diagram of a fixing device for a submarine cable according to the present invention provided on seabed soil;
FIG. 5 is another schematic diagram of a fixing device for a submarine cable according to the present invention provided on seabed soil.

Description of reference numerals:
10 - conductor layer; 11 - conductor shielding layer; 12 - insulating layer; 13 - insulating shielding layer; 14 - first wrapping layer; 15 - shielding layer; 16 - second wrapping layer; 20 - optical fiber unit; 30 - filling layer; 40 - second armor layer; 50 - outer covering layer; 100 - submarine cable; 200 - fixing support; 201 - clamp; 202 - connecting member; 203 - support leg; 2011 - nut.

### DESCRIPTION OF EMBODIMENTS

To make the purposes, technical solutions and advantages of the present invention clearer, the technical solutions of the present invention will be clearly and completely described below with reference to the accompanying drawings of the present invention. Obviously, the described embodiments are part of the embodiments of the present invention, rather than all of the embodiments. Based on the embodiments of the present invention, all other embodiments obtained by a person of ordinary skill in the art without creative effort shall fall within the protection scope of the present invention.

In the specification and claims of the present invention, features designated by the terms "first", "second" may explicitly or implicitly include one or more such features. In the description of the present invention, the meaning of "a plurality of" is two or more unless otherwise specified.

In the description of the present invention, it should be understood that the terms "center", "longitudinal", "lateral", "length", "width", "thickness", "upper", "lower", "front", "rear", "left", "right", "vertical", "horizontal", "top", "bottom", "inner", "outer" etc., indicate orientations or positional relationships based on the orientations or positional relationships shown in the accompanying drawings. they are merely for the convenience of describing of the present invention and simplifying the description, rather than indicating or implying that the referred device or element must have a specific orientation, or be constructed and operated in a specific orientation, and thus cannot be construed as a limitation on the present invention.

In the description of the present invention, it should be noted that unless otherwise clearly specified and limited, the terms "provided with", "install", "connect with", and "connect to" should be understood in a broad sense. For example, it can be a fixed connection, a detachable connection, or an integral connection; it can be a mechanical connection or an electrical connection; or it can be a direct connection or an indirect connection through an intermediate medium, or the internal communication between two elements. For those of ordinary skill in the art, the specific meanings of the above terms in the present invention can be understood according to specific situations.

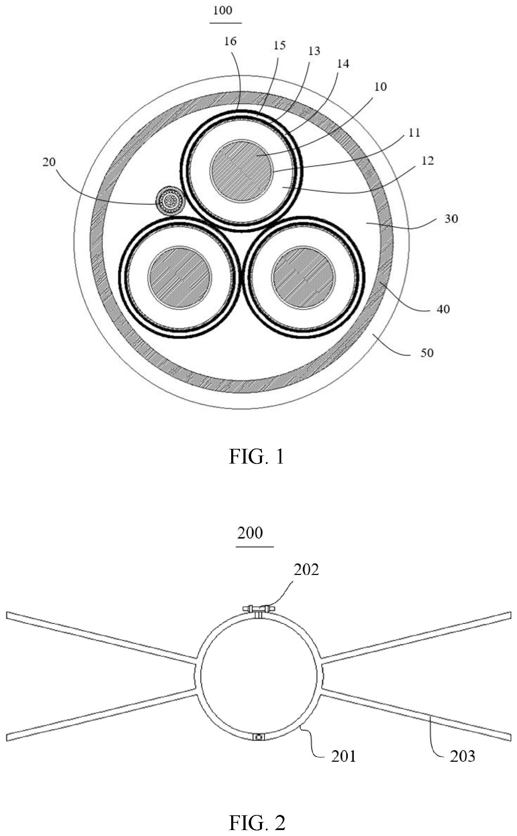

A submarine cable and a fixing device for a submarine cable of the present invention are described below with reference to FIGS. 1 to 5.

As shown in FIG. 1, in an embodiment of the present invention, the submarine cable 100 includes a plurality of conductive units, each conductive unit includes a conductor layer 10, a conductor shielding layer 11, an insulating layer 12, an insulating shielding layer 13, a first wrapping layer 14, a shielding layer 15, and a second wrapping layer 16 sequentially wrapped from inside to outside. The conductor layer 10 is formed by stranding a plurality of conductors, gaps between the plurality of conductors are filled with a semi-conductive water blocking adhesive, and a semi-conductive wrapping tape is wrapped outside the plurality of conductors.

Specifically, in this embodiment, the conductors may be copper conductors or copper alloy conductors, and the number of the conductors is three. When the three conductors are stranded, a layer-by-layer compacted structure is adopted, with a compaction factor greater than or equal to 0.95. In this embodiment, the compaction factor refers to: a ratio of actual cross-sectional areas of stranded wires to a circular area calculated based on an outer diameter of the stranded wires. A lay length of each layer is controlled to be 8 to 10 times its outer diameter. The gaps of the conductors are filled with the semi-conductive water blocking adhesive, and a density of the semi-conductive water blocking adhesive is 1.2 g/cm³. A layer of semi-conductive PBT wrapping tape is wrapped outside the conductors to tightly bind the conductors, forming a cable core.

The submarine cable provided by the embodiment of the present invention, by filling the gaps between the conductors with the semi-conductive water blocking adhesive and compacting the plurality of conductors during stranding, increases the self-weight of the submarine cable while reducing the outer diameter of the submarine cable. This can achieve the effect of improving the stability of the submarine cable without adding counterweight blocks or increasing the thickness of each structural layer, simplifying the production process and reducing the manufacturing cost.

Further, a semi-conductive shielding material is extruded outside the cable core to form the conductor shielding layer 11. In this embodiment, a thickness of the conductor shielding layer 11 is set based on a standard that the insulating layer shall not collapse inward, and considering the minimum thickness design, for submarine cables 100 below 66 kV, the conductor shielding layer 11 can be designed with a nominal thickness of 0.6 mm.

A cross-linked polyethylene material is extruded outside the conductor shielding layer 11 to form the insulating layer 12. A thickness of the insulating layer 12 is designed as a thin-wall insulation based on the maximum field strength verified by a type test for a corresponding voltage rating.

An insulating shielding layer 13 is extruded outside the insulating layer 12. In this embodiment, a material of the insulating shielding layer 13 is a semi-conductive shielding material, and a thickness of the insulating shielding layer 13 is the thickness of the conductor shielding layer 11 minus 0.2 mm.

The first wrapping layer 14 and the second wrapping layer 16 are a semi-conductive water blocking tape. The first wrapping layer 14 is wrapped outside the insulating shielding layer 13, and the second wrapping layer 16 is wrapped outside the shielding layer 15.

The shielding layer 15 adopts a flat metal wire shielding layer, such as flat copper wire. The copper wire, as the shielding layer 15, has high conductivity and can be designed with a relatively small thickness. The flat copper wire should cover a surface of the first wrapping layer 14 as completely as possible. Therefore, the width, the thickness, and the number of flat copper wire need to be designed based on short-circuit current requirements of the cable system. When meeting the same short-circuit current requirements, the thickness of a flat copper wire is only half that of a round copper wire. Compared with other metal wires, the flat copper wire is thinner, which can effectively reduce the overall outer diameter of the submarine cable.

In the submarine cable provided by the embodiment of the present invention, the shielding layer is provided as a flat metal wire shielding layer, which has a thinner thickness than that of a conventional shielding layer, thereby reducing the outer diameter of the submarine cable.

As shown in FIG. 1, in an embodiment of the present invention, the submarine cable 100 further includes an optical fiber unit 20, the optical fiber unit 20 being stranded with the plurality of conductive units to form a cable. The optical fiber unit 20 includes a stainless steel tube, a first armor layer, and an outer sheath layer sequentially wrapped from inside to outside.

As shown in FIG. 1, in an embodiment of the present invention, the submarine cable 100 further includes a filling layer 30, a second armor layer 40 and an outer covering layer 50 sequentially wrapped from inside to outside, the filling layer 30 being wrapped outside the cable.

In this embodiment, the filling layer 30 is a solid filling layer, and a material of the filling layer 30 is polyvinyl chloride material, which is produced using an extruder with an extrusion die. A filling factor of the extruded solid filling is greater than or equal to 95%, and a filling density thereof is much greater than that when using conventional filling strips or filling ropes. The density of polyvinyl chloride is 1.3-1.45 g/cm³, which does not cause the problem of increased buoyancy and reduced weight in water. In addition, the filling layer 30 can additionally serve as a protective layer for a phase-separated cable core and an inner bedding layer for a cable armor of the conventional structure. It may minimize the increase in outer diameter while increasing the overall weight. Compared with a conventional structure of a phase-separated sheath layer + a filling layer + an inner bedding layer, this design reduces the material cost and the manufacturing cost, and simplifies the production process.

The second armor layer 40 adopts a flat metal wire armor layer. The flat metal wire has a higher filling degree in the armor layer compared with conventional round metal wires. Under the same tension requirement, the thickness of the flat metal wire is only half that of the round metal wire, which can effectively reduce the overall outer diameter of the submarine cable 100.

The outer covering layer 50 is composed of two layers of polypropylene fiber ropes directly wrapped around the second armor layer 40, and serves as an armor protective layer.

The submarine cable provided by the embodiment of the present invention, by improving structural layers inside the submarine cable, increases a specific gravity of each layer structure of the submarine cable, thereby increasing the self-weight of the submarine cable and reducing the outer diameter of the submarine cable. In this way, under installation conditions where burial is not permitted, the submarine cable can achieve a self-stable state, reducing fatigue and mechanical damage to the submarine cable, and extending the service life of the submarine cable.

As shown in FIG. 2, an embodiment of the present invention further provides a fixing device for a submarine cable, including a submarine cable 100 and a fixing support 200. The fixing support 200 includes: a fixing assembly and a plurality of support legs 203, the fixing assembly being used for fixing the submarine cable 100, the plurality of support legs 203 being connected to the fixing assembly, each support leg 203 being inclined with respect to a horizontal plane.

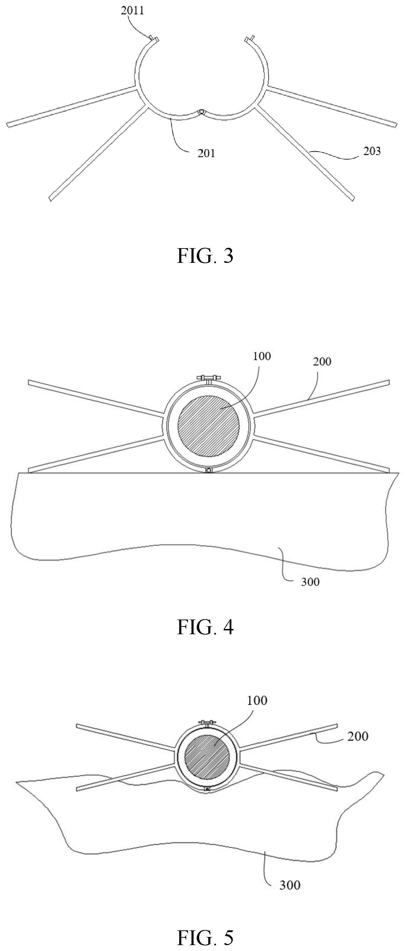

Specifically, in order to further improve the stability of the submarine cable 100, an embodiment of the present invention further provides a fixing device. As shown in FIG. 4, during an actual installation process of the submarine cable 100, when the submarine cable 100 reaches an unstable or extreme position area determined by route survey, this unstable section or extreme position of the submarine cable 100 is fixed within the fixing support 200. In order to improve the stability of the submarine cable 100, one fixing support 200 can arranged at every predetermined interval. The submarine cable 100 and the fixing support 200 are laid together on the seabed surface, and their positions are adjusted by an underwater robot according to the actual seabed conditions. When the submarine cable 100 and the fixing support 200 reach the seabed surface, as shown in FIG. 5, as the ocean flows, the soil on the seabed surface moves and buries the support legs 203, thereby fixing the fixing support 200 within the soil, ensuring the stability of the submarine cable 100. Furthermore, due to a large surface area of the support legs 203, marine organisms will gradually attach to the support legs 203 over time, which will further improve the stability of the fixing support 200, thereby further improving the stability of the submarine cable 100.

In this embodiment, each support leg 203 is inclined with respect to the horizontal plane, so that the support legs 203 can play a supporting role for the fixing assembly. In this embodiment, the number of the support legs 203 is two pairs, and two support legs in each pair are symmetrically arranged, so that four support legs 203 form a stable structure. Optionally, in an embodiment of the present invention, an angle between the support legs 203 and the horizontal plane is 30°, and each support leg 203 has a length of 500 mm and a thickness of 15 mm.

The fixing device for a submarine cable provided by the embodiment of the present invention, by providing a fixing support, increases the stability of the submarine cable. The installation method for the fixing support is simple. Compared with conventional construction methods, the fixing support has a lower manufacturing cost and a simpler construction method, shortening construction period, and also reducing construction cost.

As shown in FIGS. 2 and 3, in an embodiment of the present invention, the fixing assembly includes a pair of clamps 201 and a connecting member 202, first ends of the pair of clamps 201 being rotatably connected, and second ends of the pair of clamps 201 being connected via the connecting member 202.

Specifically, each clamp 201 is a semi-circular clamp. After two clamps 201 are connected, a diameter of a cavity formed by them is slightly larger than the outer diameter of the submarine cable 100. One end of the two clamps 201 is connected via a rotating shaft, so that the two clamps 201 can rotate relative to each other to facilitate placement of the submarine cable 100 into the cavity. The other end of each clamp 201 is provided with a nut 2011, and the connecting member 202 passes through the pair of nuts 2011 to connect the pair of clamps 201 together.

Optionally, in an embodiment of the present invention, the connecting member 202 is a bolt.

Optionally, in an embodiment of the present invention, the diameter of the cavity is approximately 10 mm larger than the diameter of the submarine cable 100, and the thickness of the clamps 201 is 15 mm.

Finally, it should be noted that the above embodiments are only used to illustrate the technical solutions of the present invention, rather than to limit them. Although the present invention has been described in detail with reference to the foregoing embodiments, persons of ordinary skill in the art should understand that they can still modify the technical solutions described in the foregoing embodiments, or make equivalent substitutions for some of the technical features therein. These modifications or substitutions do not cause the essence of the corresponding technical solutions to deviate from the spirit and scope of the technical solutions of the embodiments of the present invention.

## Claims

1. A submarine cable, comprising a plurality of conductive units, each conductive unit comprising a conductor layer, a conductor shielding layer, an insulating layer, an insulating shielding layer, a first wrapping layer, a shielding layer and a second wrapping layer sequentially wrapped from inside to outside, wherein
the conductor layer is formed by stranding a plurality of conductors, gaps between the plurality of conductors are filled with a semi-conductive water blocking adhesive, and a semi-conductive wrapping tape is wrapped outside the plurality of conductors.

2. The submarine cable according to claim 1, wherein when the plurality of conductors are stranded, a compaction factor thereof is greater than or equal to 0.95.

3. The submarine cable according to claim 1, wherein the first wrapping layer and the second wrapping layer are a semi-conductive water blocking tape.

4. The submarine cable according to claim 1, wherein the shielding layer is a flat metal wire shielding layer.

5. The submarine cable according to claim 1, wherein the submarine cable further comprises an optical fiber unit, and the optical fiber unit is stranded together with the plurality of conductive units into a cable;
the optical fiber unit comprises a stainless steel tube, a first armor layer and an outer sheath layer sequentially wrapped from inside to outside.

6. The submarine cable according to claim 5, wherein the submarine cable further comprises a filling layer, a second armor layer and an outer covering layer sequentially wrapped from inside to outside, the filling layer being wrapped outside the cable.

7. The submarine cable according to claim 6, wherein the filling layer is a solid filling layer, and a filling factor of the filling layer is greater than or equal to 95%.

8. The submarine cable according to claim 6, wherein the second armor layer is a flat metal wire armor layer.

9. A fixing device for a submarine cable, comprising a fixing support and the submarine cable according to any one of claims 1 to 8;
wherein the fixing support comprises a fixing assembly and a plurality of support legs, the fixing assembly being configured to fix the submarine cable, the plurality of support legs being in connection with the fixing assembly, and each support leg being inclined with respect to a horizontal plane.

10. The fixing device for a submarine cable according to claim 9, wherein the fixing assembly comprises a pair of clamps and a connecting member; first ends of the pair of clamps are rotatably connected, and second ends of the pair of clamps are connected through the connecting member.
